# EUROPÄISCHE PATENTANMELDUNG

(11) **EP 4 706 467 A1**
(43) Veröffentlichungstag der Anmeldung: **11.03.2026**
(21) Anmeldenummer: 25198582.6
(22) Anmeldetag: 28.08.2025
(51) Int. Cl.: A47J 31/46

(54) **SELBSTENTLEERENDER GETRÄNKEAUSLAUF UND GETRÄNKEZUBEREITUNGSGERÄT MIT EINEM SELBSTENTLEERENDEN GETRÄNKEAUSLAUF**

(30) Priorität: 04.09.2024 DE 102024208415
(71) Anmelder: BSH Hausgeräte GmbH, 81739 München (DE)
(72) Erfinder: Gerl, Bernhard, 83278 Traunstein (DE); Henz, Manuel, 83410 Laufen (DE); Haslacher, Christian, 5303 Thalgau (AT); Tausch, Vanessa, 83236 Übersee (DE)

(57) **Zusammenfassung**

Die Erfindung betrifft einen Getränkeauslauf (G2) eines Getränkezubereitungsgeräts (K2) für Haushaltszwecke umfassend einen aus einer Zubereitungsvorrichtung (10 kommenden Zulauf (14), eine der Zubereitungsvorrichtung (10) in Strömungsrichtung abgewandte Gabelung (16) des Zulaufs (14) und zumindest zwei sich in Strömungsrichtung an die Gabelung (16) anschließende Einzelausläufe (17, 18), wobei sich zumindest ein erster Einzelauslauf (7; 17) von dem anderen, einem zweiten Einzelauslauf (8; 18) oder von den übrigen Einzelausläufen (7; 8; 17, 18) in seinen Abmessungen unterscheidet, so dass im Betrieb eine selbsttätige vollständige Entleerung aller Einzelausläufe (7; 8; 17, 18) erfolgt. Die Erfindung betrifft außerdem ein mit einem derartigen Getränkeauslauf (G2) ausgestattetes Getränkezubereitungsgerät (K2).

## Beschreibung

Die Erfindung betrifft einen Getränkeauslauf eines Getränkezubereitungsgeräts für Haushaltszwecke, insbesondere eines Kaffeevollautomaten, mit einem aus einer Zubereitungsvorrichtung kommenden ("geräteseitigen") Zulauf, mit einer der Zubereitungsvorrichtung in Strömungsrichtung abgewandten Gabelung des Zulaufs und mit zumindest zwei sich in Strömungsrichtung an die Gabelung anschließenden Einzelausläufen. Die Erfindung betrifft außerdem ein Getränkezubereitungsgerät für Haushaltszwecke, insbesondere einen Kaffeevollautomaten, mit einem derartigen Getränkeauslauf.

Die DE 10 2021 109 252 A1 zeigt eine Vorrichtung zum Zubereiten eines Kaffeegetränks mit einer Brüheinheit, der Heißwasser aus einem Heißwasserbereiter unter Druck zuleitbar ist, und einen mit der Brüheinheit über eine Auslassleitung verbundenen Getränkeauslass, über den frisch gebrühtes Kaffeegetränk in ein darunter zu platzierendes Trinkgefäß ausgegeben werden kann. Es ist eine Rücksaugpumpe vorgesehen, die ansaugseitig mit der Auslassleitung fluidleitend verbunden ist und die druckseitig in einen Ablauf oder einen Sammelbehälter mündet, um vor, während oder nach einem Brühvorgang Kaffeegetränk aus der Kaffeeleitung abzusaugen und in den Ablauf oder Sammelbehälter zu leiten.

Aufgabe der Erfindung ist es, bei einem Getränkebezug die Abgabe von Restflüssigkeit aus einem vorangegangenen Getränkebezug zu vermeiden.

Diese Aufgabe wird bei dem eingangs genannten Getränkeauslauf erfindungsgemäß dadurch gelöst, dass sich zumindest ein Einzelauslauf von dem anderen Einzelauslauf oder von den übrigen Einzelausläufen in seinen geometrischen Abmessungen so unterscheidet, dass eine vollständige Entleerung aller Einzelausläufe erfolgt.

Wie herkömmliche Kaffeevollautomaten, verfügt auch der erfindungsgemäße Getränkeauslauf über einen Zulauf, also eine Leitung, die das in der Zubereitungsvorrichtung, zum Beispiel in einer Brühkammer, hergestellte Getränk zu den Einzelausläufen führt. Der Zulauf schließt in Strömungsrichtung des zubereiteten Getränks unmittelbar an die Zubereitungsvorrichtung an und mündet in einer Gabelung, an die parallel zueinander verlaufende Einzelausläufe anschließen. Die Einzelausläufe sind mit ihren der Gabelung abgewandten freien Enden weitgehend vertikal abwärts auf eine Abstellfläche für Getränkegefäße, beispielsweise für Kaffeetassen, gerichtet. Die Einzelausläufe können sowohl flexible als auch unflexible Hohlkörper sein, beispielsweise Schläuche oder Rohre. Bei den Einzelausläufen kann es sich um zwei oder mehrere Einzelausläufe handeln. Der Einfachheit halber wird das Prinzip im Folgenden anhand von zwei Einzelausläufen erläutert.

Erfindungsgemäß weist zumindest ein erster Einzelauslauf eine von dem anderen, dem zweiten Einzelauslauf verschiedene Geometrie auf. Der erste Einzelauslauf zeichnet sich also erfindungsgemäß dadurch aus, dass er sich hinsichtlich seiner geometrischen Abmessungen derart von dem zweiten Einzelauslauf unterscheidet, dass er zwischen der Gabelung und seinem tassenseitigen freien Ende ein anderes, beispielsweise ein größeres Flüssigkeitsvolumen fassen kann.

Während der Zubereitung des Getränks in der beispielhaften Brühkammer gelangt es durch den Zulauf und über die Gabelung in die Einzelausläufe. Von dort fließt es in die bereitgestellten Tassen. Am Ende der Getränkezubereitung schließt ein Brühventil stromab der Brühkammer, woraufhin weder Getränkeflüssigkeit noch Luft nachströmt. Dadurch befinden sich noch Getränkereste bzw. Restflüssigkeit in dem Zulauf sowie in den Einzelausläufen.

Die beiden Einzelausläufe sind an ihrem tassenseitigen Ende offen und an ihrem anderen Ende durch die Gabelung stromab des Zulaufs miteinander verbunden. Damit stellen sie quasi umgekehrte "kommunizierende Röhren" dar. Da der erste Einzelauslauf ein höheres Fassungsvermögen hat, enthält er nun ein größeres Flüssigkeitsvolumen und damit ein größeres Flüssigkeitsgewicht als der zweite Einzelauslauf. Anders als bei gleich dimensionierten Einzelausläufen besteht also ein Ungleichgewicht in den beiden fluidisch gekoppelten Einzelausläufen, nämlich ein höheres Flüssigkeitsgewicht im ersten Einzelauslauf. Es verursacht ein Auslaufen der Flüssigkeit aus dem ersten Einzelauslauf. Beim Herauslaufen der Flüssigkeit aus dem ersten Einzelauslauf entsteht ein hydrostatischer Druck, der das Ansaugen der Flüssigkeit aus dem parallelen zweiten Einzelauslauf in den ersten Einzelauslauf hinein bewirkt, bekannt als Saugheberprinzip. Auch die Restflüssigkeit aus dem zweiten Einzelauslauf gelangt also über den ersten Einzelauslauf hindurch in die Tasse. Beide Einzelausläufe werden somit vollständig in die Tassen entleert.

Die Erfindung wendet sich also davon ab, zusätzliche Systeme zur Belüftung des Zulaufs oder zum Absaugen der Restflüssigkeiten aus dem Zulauf zu verbauen. Sie verfolgt vielmehr das Prinzip, am Ende eines Zubereitungsvorgangs konstruktiv gezielt für die Entstehung eines hydrostatischen Drucks zu sorgen. Daher ermöglicht die Erfindung eine konstruktiv weitaus einfachere und daher kostengünstigere und hinsichtlich der Fertigung praktikablere Lösung, lediglich durch eine geometrische Modifizierung der Einzelausläufe. Stromab des Brühventils bleibt der erfindungsgemäße Getränkeauslauf damit frei von Unterbrechungen wie Einbauten, Ventilen oder Belüftungsmöglichkeiten, sondern bietet eine fluidisch durchgängig dichte Leitung bis zu den tassenseitigen freien Enden der Einzelausläufe hin.

Die wünschenswerte Entleerung des Getränkeauslaufs stromab der Zubereitungseinrichtung bzw. Brühkammer betrifft nicht nur die Einzelausläufe, sondern auch den sie versorgenden Zulauf. Nach einer vorteilhaften Ausgestaltung der Erfindung kann daher die Gabelung, die das Getränk in die Einzelausläufe leitet, vorzugsweise nah an der Zubereitungsvorrichtung bzw. am Brühventil liegen. Sie kann im Idealfall fluidisch unmittelbar an das Brühventil anschließen oder einen geringen fluidischen Abstand von wenigen Millimetern haben, um den Zulauf so kurz wie möglich zu halten. Damit lässt sich eine möglichst vollständige Entleerung des Getränkeauslaufs stromab der Zubereitungseinrichtung gewährleisten.

Erfindungsgemäß verfügen die Einzelausläufe über unterschiedliche geometrische Abmessungen, sodass sie unterschiedliche Volumina beinhalten können. Nach einer weiteren vorteilhaften Ausgestaltung der Erfindung können sich die Einzelausläufe dadurch unterscheiden, dass sie bei gleichem Innendurchmesser unterschiedlich lang sind. Die Länge der Einzelausläufe bemisst sich von der Gabelung bis zu ihrem freien tassenseitigen Ende. Der erste und der zweite Einzelauslauf können damit aus den an sich bekannten Vorprodukten, also aus den herkömmlichen Schläuchen oder Röhren hergestellt werden, wobei sie lediglich unterschiedlich lang ausgeführt werden müssen. Sie können damit denkbar einfach hergestellt werden, ohne dass der Montageprozess relevant abgeändert werden müsste.

Auf die nach Beendigung der Getränkeausgabe in den Einzelausläufen verbleibenden Getränkereste wirken unterschiedliche physikalische Kräfte. So ergeben die in den Einzelausläufen wirkenden Kohäsions- und Adhäsionskräfte wie auch der Widerstand des Leitungssystems, also der beiden Einzelausläufe und der Gabelung, eine resultierende Kraft. Ihr ist die durch den im erfindungsgemäßen Getränkeauslauf erzeugten hydrostatischen Druck bewirkte Strömungsrichtung entgegengerichtet. Daher muss die Höhendifferenz ein Minimum überschreiten, bei dem die auf die Getränkereste wirkenden Kräfte im Gleichgewicht, also gleich Null, sind. Die Höhendifferenz liegt bei für die Einzelausläufe gebräuchlichen Durchmessern in einem Bereich von etwa 0,8 cm bis 0,3 cm, vorzugsweise bei etwa 0,5 cm.

Die ungleiche Länge der Einzelausläufe muss optisch an ihrem tassenseitigen freien Ende nicht erkennbar sein. Denn die Gabelung ist vor dem Benutzer des Getränkezubereitungsgeräts regelmäßig in einem Gehäuse verborgen und kann, statt bisher mittig, erfindungsgemäß außermittig zwischen den freien Enden der Einzelausläufe positioniert sein.

Nach einer weiteren vorteilhaften Ausgestaltung der Erfindung können sich die Einzelausläufe dadurch unterscheiden, dass sie bei gleicher Länge unterschiedliche Innendurchmesser haben. Äußerlich brauchen sich die Einzelausläufe also hinsichtlich ihrer Länge nicht zu unterscheiden, um unterschiedliche Flüssigkeitsvolumina einschließen zu können und um das Saugheberprinzip zum Entleeren zu nutzen. Da der Druckverlust in geraden Leitungsabschnitten mit sinkendem Innendurchmesser der Leitung steigt, werden die Innendurchmesser der Einzelausläufe regelmäßig so gewählt, dass der in den Einzelausläufen entstehende Druckabfall sowie die Kapillarwirkung überwunden werden.

Bei übereinstimmender Länge der Einzelausläufe und unterschiedlichen Innendurchmessern können die obigen Einzelausläufe bei gleicher Wandungsdicke ihrer Schläuche oder Röhren optisch noch anhand ihrer Außenabmessungen unterscheidbar sein. Nach einer weiteren vorteilhaften Ausgestaltung der Erfindung können die Einzelausläufe aus unterschiedlich dicken Materialien gefertigt sein. Damit kann der Unterschied der Innendurchmesser kaschiert werden, um die gleich langen Einzelausläufe trotz unterschiedlicher Innendurchmesser äußerlich gleichartig erscheinen zu lassen.

Nach einer weiteren vorteilhaften Ausgestaltung der Erfindung können sich die Einzelausläufe dadurch unterscheiden, dass sie sowohl unterschiedlich lang sind, als auch unterschiedliche Innendurchmesser haben. Vorzugsweise hat der längere Einzelauslauf auch den größeren Innendurchmesser, damit sich die Wirkung der unterschiedlichen Abmessungen, nämlich das unterschiedliche Innenvolumen, nicht gegenseitig aufheben. Bei geeigneten Abmessungen kann aber auch der längere, erste Einzelauslauf den geringeren Durchmesser und dennoch ein gegenüber dem zweiten Einzelauslauf größeres Volumen bieten. Der längere erste Einzelauslauf kann auch ein geringeres Volumen aufweisen als der zweite Einzelauslauf, wenn dessen Abmessungen, insbesondere dessen Innendurchmesser, geeignet gewählt ist. Die Variation der volumenbestimmenden Abmessungen der Einzelausläufe kann auch dazu dienen, auf konstruktive Besonderheiten oder Notwendigkeiten, insbesondere auf eine evtl. exzentrische Anordnung der Gabelung, zu reagieren.

Grundsätzlich kann sich der Getränkeauslauf, also der Zulauf, die Gabelung und die Einzelausläufe, aus Röhren zusammensetzen. Sie bieten eine hohe Stabilität. Nach einer weiteren vorteilhaften Ausgestaltung der Erfindung können zumindest die Einzelausläufe Schläuche umfassen. Aufgrund ihres biegbaren bzw. flexiblen Materials können sie beispielsweise eine Höhenverstellbarkeit des Getränkeauslaufs begünstigen. Außerdem können sie Handhabungs- oder Montagevorteile bei der Herstellung und beim Austausch im Falle einer Reparatur bieten.

Die eingangs genannte Aufgabe wird bei dem oben genannten Getränkezubereitungsgerät für Haushaltszwecke, das eine Zubereitungseinrichtung, insbesondere eine Brüheinheit, umfasst, erfindungsgemäß dadurch gelöst, dass es stromab der Zubereitungseinrichtung einen oben beschriebenen Getränkeauslauf aufweist. Das Getränkezubereitungsgerät kann dadurch die oben bereits aufgeführten Vorteile und vor allem einen konstruktiv einfacheren Aufbau bieten, der kostengünstiger herzustellen und weniger fehleranfällig ist.

Das Prinzip der Erfindung wird im Folgenden anhand einer Zeichnung beispielshalber noch näher erläutert. In der Zeichnung zeigen:
- Figur 1:: eine schematische Ansicht eines Kaffeevollautomaten nach dem Stand der Technik,
- Figuren 2a bis 2c:: eine schematische Ansicht eines erfindungsgemäßen Kaffeevollautomaten.

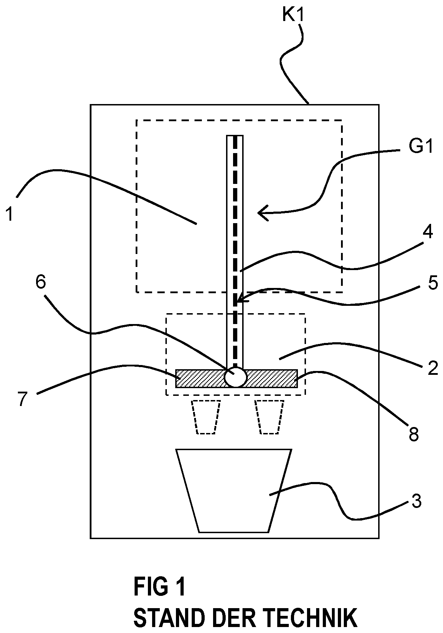

Figur 1 zeigt eine stark schematisierte Ansicht eines Kaffeevollautomaten K nach dem Stand der Technik. Von einer Brühkammer 1 als Zubereitungsvorrichtung gelangt ein darin zubereitetes Getränk durch einen Getränkeauslauf G1 hindurch in eine darunter abgestellte Tasse 2. Der Getränkeauslauf G1 umfasst einen Zulauf 4, der in eine höhenverstellbare Ausgabeeinheit 2 mündet. Der Zulauf 4 verzweigt sich in der Ausgabeeinheit 2 an seinem stromabwärtigen Ende in einer Gabelung 6. An die Gabelung 6 schließen zwei kurze Einzelausläufe an, ein erster Einzelauslauf 7 und eine zweiter Einzelauslauf 8, die auf die Tasse 3 gerichtet sind, die unter der Ausgabeeinheit 2 des Kaffeevollautomaten abgestellt ist.

Im Zulauf 4 und in den kurzen ersten und zweiten Einzelausläufen 7, 8 verbleibt nach der Getränkeausgabe Restflüssigkeit 5, weil nach Abschluss der Getränkezubereitung ein Brühventil der Brühkammer 1 schließt und daher weder Flüssigkeit noch Luft nachströmen und ein Entleeren des Zulaufs 4 ermöglichen können. Die evtl. abgekühlte Restflüssigkeit 5 der vorherigen Getränkezubereitung gelangt bei einer nachfolgenden Getränkezubereitung gleich zu Beginn in die neue Tasse 3. Gerade bei kleinen Getränkeportionen, wie zum Beispiel bei Espresso, kann die Restflüssigkeit 5 der vorherigen Getränkezubereitung die Qualität eines im Anschluss zubereiteten Getränks negativ beeinflussen.

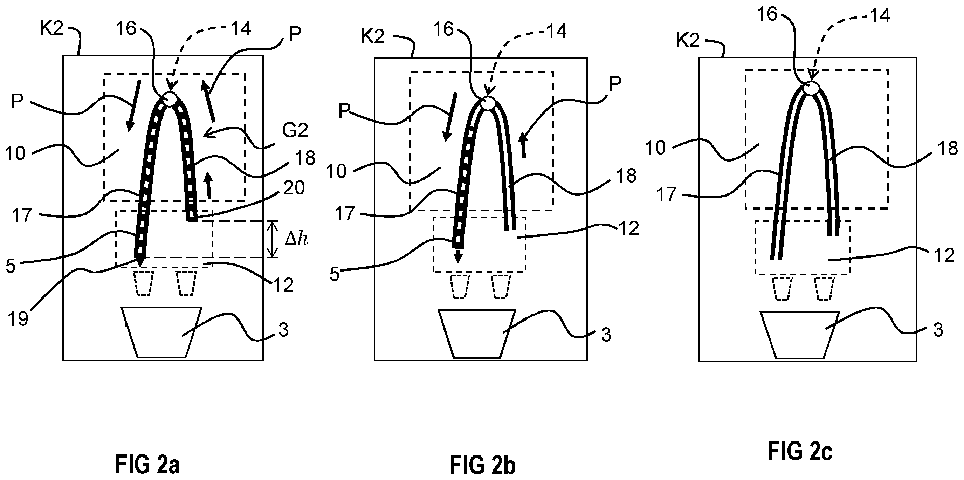

Die Figuren 2a bis 2c zeigen eine stark schematisierte Ansicht eines erfindungsgemäßen Kaffeevollautomaten K2. Eine Brühkammer 10 als Zubereitungsvorrichtung gibt das Getränk an einen senkrecht zur Zeichenebene verlaufenden Zulauf 14 eines erfindungsgemäßen Getränkeauslaufs G2 ab. Der Zulauf 14 teilt sich in einer der Zubereitungsvorrichtung 10 in Strömungsrichtung abgewandten und in der Zeichnungsebene liegenden Gabelung 16 auf. Stromab der Gabelung 16 erstrecken sich zwei parallel verlaufende Einzelausläufe bis zu einer Ausgabeeinheit 12 hin, nämlich ein erster Einzelauslauf 17 und ein zweiter Einzelauslauf 18, die beide auf eine Tasse 3 gerichtet ist.

Im Gegensatz zur Gabelung 6 bezüglich der Ausgabeeinheit 2 der Fig. 1 liegt die erfindungsgemäße Gabelung 16 wesentlich weiter stromauf der Ausgabeeinheit 12 und damit deutlich näher an der Brühkammer 10. Dadurch verkürzt sich die Länge des verdeckt dargestellten Zulaufs 14 zwischen der Brühkammer 10 und der Gabelung 16. Folglich sind die ersten und zweiten Einzelausläufe 17, 18 sehr viel länger als im Stand der Technik (s. Fig. 1).

Ein weiterer Unterschied gegenüber dem Stand der Technik besteht darin, dass die ersten und zweiten Einzelausläufe 17, 18 eine unterschiedliche Länge aufweisen: Die Länge der ersten und zweiten Einzelausläufe 17, 18 ergibt sich jeweils zwischen ihrem tassenfernen Ende in der Gabelung 16 und einem tassennahen und freien Ende 19, 20 in der Ausgabeeinheit 12. Während das erste freie Ende 19 des linken, ersten Einzelauslaufs 17 vertikal wesentlich weiter hinab zur Tasse 3 hin in die Ausgabeeinheit 12 hineinragt, liegt das zweite freie Ende 20 des rechten, zweiten Einzelauslaufs 18 deutlich höher über der Tasse 3. Die unterschiedlichen Höhenlagen der ersten und zweiten freien Enden 19, 20 führen also zu einer Längen- bzw. Höhendifferenz Δh der ersten und zweiten Einzelausläufe 17, 18. Sie beträgt etwa 0,4 cm.

Nach Abschluss der Getränkeausgabe schließt sich ein Brühventil der Brühkammer 10, so dass sich Restflüssigkeit 5 im Zulauf 14, in der Gablung 16 und in den ersten und zweiten Einzelausläufen 17, 18 befindet, die mangels Nachströmens von Flüssigkeit oder Luft dort zunächst zum Stehen kommt. Die Höhendifferenz Δh der ersten und zweiten Einzelausläufe 17, 18 bewirkt nun, dass sich unmittelbar nach der Getränkeausgabe ein höheres Volumen an Restflüssigkeit 5 im längeren, linken und ersten Einzelauslauf 17 befindet als im rechten, zweiten Einzelauslauf 18. Die ersten und zweiten Einzelausläufe 17, 18 sind nach unten geöffnet. Aufgrund des Ungleichgewichts der Restflüssigkeit 5 in den ersten und zweiten Einzelausläufen 17, 18 fließt nun die Restflüssigkeit 5 aus dem längeren ersten Einzelauslauf 17 heraus. Dabei wird ein hydrostatischer Druck erzeugt, der die verbliebene Restflüssigkeit 5 aus dem über die Gabelung 16 verbundenen rechten, zweiten Einzelauslauf 18 sowie Luft aus der Umgebung in den zweiten Einzelauslauf 18 ansaugt (sog. Saugheberprinzip). Ohne weitere konstruktive Maßnahmen wird daher die Restflüssigkeit 5 aus dem rechten, zweiten Einzelauslauf 18 über die Gabelung 16 als Scheitelpunkt hinweg durch den längeren, ersten Einzelauslauf 17 in Richtung der Pfeile P (Fig. 2a, 2b) in die Tasse 3 befördert, bis ersten und zweiten Einzelausläufe 17, 18 vollständig entleert sind (Fig. 2c).

Die Gabelung 16 ist der Brühkammer 10 gegenüber erfindungsgemäß sehr nahe angeordnet, der Zulauf 14 ist also sehr kurz ausgebildet. Damit bleibt nach dem selbsttätigen Entleeren der ersten und zweiten Einzelausläufe 17, 18 keine oder kaum nennenswerte Restflüssigkeit 5 mehr übrig, die bei einem anschließenden Zubereitungsvorgang in eine frische Tasse 3 gelangen könnte.

Dem obigen hydrostatischen Druck wirken physikalische Kräfte entgegen, die sowohl auf einem gewissen fluidischen Widerstand des Leitungssystems aus den ersten und zweiten Einzelausläufen 17, 18 und der Gabelung 16, als auch auf Kapillarwirkung beruhen. Die resultierende Kraft wirkt entgegengesetzt der in Figuren 2a, 2b durch die Pfeile P bezeichneten Strömungsrichtung und ist u. a. abhängig von Länge, Durchmesser und Material des Leitungssystems sowie den physikalischen Eigenschaften der durch die ersten und zweiten Einzelausläufe 17, 18 strömenden Restflüssigkeit 5. Um die der Strömungsrichtung entgegengerichtete Kraft zu überwinden, muss die Höhendifferenz Δh je nach Eigenschaften des Leitungssystems und des Fluids ein Minimum von etwa 0,4 bis 0,6 cm betragen.

Da es sich bei dem vorhergehenden, detailliert beschriebenen Getränkeauslauf um ein Ausführungsbeispiel handelt, kann er in üblicher Weise vom Fachmann in einem weiten Umfang modifiziert werden, ohne den Bereich der Erfindung zu verlassen. Insbesondere können auch die konkreten Ausgestaltungen der Einzelausläufe, ihre Anzahl oder die Lage der Gabelung in anderer Form als in der hier beschriebenen erfolgen. Ebenso kann die Ausgabeeinheit in einer anderen Form ausgestaltet werden, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Brühkammer
- 2: Ausgabeeinheit
- 3: Tasse
- 4: Zulauf
- 5: Restflüssigkeit
- 6: Gabelung
- 7: erster Einzelauslauf
- 8: erster Einzelauslauf
- 10: Brühkammer
- 12: Ausgabeeinheit
- 14: Zulauf
- 16: Gabelung
- 17: erster Einzelauslauf
- 18: zweiter Einzelauslauf
- 19: erstes freies Ende
- 20: zweites freies Ende

- Δh: Höhendifferenz
- G1: Getränkeauslauf
- G2: Getränkeauslauf
- K1: Kaffeevollautomat
- K2: Kaffeevollautomat
- P: Pfeil

## Patentansprüche

1. Getränkeauslauf (G1; G2) eines Getränkezubereitungsgeräts (K1; K2) für Haushaltszwecke, insbesondere eines Kaffeevollautomaten, umfassend:
- einen aus einer Zubereitungsvorrichtung (1; 10) kommenden Zulauf (4; 14),
- eine der Zubereitungsvorrichtung (1; 10) in Strömungsrichtung abgewandte Gabelung (6; 16) des Zulaufs (4; 14), und
- zumindest zwei sich in Strömungsrichtung an die Gabelung (6; 16) anschließende Einzelausläufe (7; 8; 17, 18),
**dadurch gekennzeichnet, dass** sich zumindest ein erster Einzelauslauf (7; 17) von dem anderen, einem zweiten Einzelauslauf (8; 18) oder von den übrigen Einzelausläufen (7; 8; 17, 18) in seinen Abmessungen unterscheidet, so dass im Betrieb eine selbsttätige vollständige Entleerung aller Einzelausläufe (7; 8; 17, 18) erfolgt.

2. Getränkeauslauf (G2) nach Anspruch 1, **dadurch gekennzeichnet, dass** die Gabelung (16) nah an der Zubereitungsvorrichtung (10) liegt.

3. Getränkeauslauf (G2) nach Anspruch 1 oder 2, **dadurch gekennzeichnet, dass** sich zumindest die ersten und zweiten Einzelausläufe (7; 8; 17, 18) dadurch unterscheiden, dass sie bei gleichem Innendurchmesser unterschiedlich lang sind.

4. Getränkeauslauf nach Anspruch 1 oder 2, **dadurch gekennzeichnet, dass** sich die Einzelausläufe (7; 8; 17, 18) dadurch unterscheiden, dass sie bei gleicher Länge unterschiedliche Innendurchmesser haben.

5. Getränkeauslauf nach Anspruch 4, **dadurch gekennzeichnet, dass** sich die Einzelausläufe (7; 8; 17, 18) dadurch unterscheiden, dass sie aus unterschiedlich dicken Materialien gefertigt sind.

6. Getränkeauslauf nach Anspruch 1 oder 2, **dadurch gekennzeichnet, dass** sich die Einzelausläufe (7; 8; 17, 18) dadurch unterscheiden, dass sie unterschiedlich lang sind und unterschiedliche Innendurchmesser haben.

7. Getränkeauslauf (G2) nach einem der Ansprüche 1 bis 6, **dadurch gekennzeichnet, dass** zumindest die Einzelausläufe (17, 18) Schläuche umfassen.

8. Getränkezubereitungsgerät (G2) für Haushaltszwecke, insbesondere Kaffeevollautomat (K2), umfassend:
- eine Zubereitungsvorrichtung (10),
- einen Getränkeauslauf (G2) stromab der Zubereitungsvorrichtung (10) gemäß einem der Ansprüche 1 bis 7.
